# EUROPEAN PATENT APPLICATION

(11) **EP 4 710 746 A1**
(43) Date of publication of application: **18.03.2026**
(21) Application number: 24844620.5
(22) Date of filing: 10.07.2024
(51) Int. Cl.: A01D 34/00, G05D 1/00

(54) **ROBOT LAWN MOWER**

(30) Priority: 24.07.2023 CN 202310908086
(71) Applicant: Nanjing Chervon Industry Co., Ltd., Nanjing, Jiangsu 211106 (CN)
(72) Inventor: GAO, Hongchen, Nanjing, Jiangsu 211106 (CN); ZHANG, Zhishang, Nanjing, Jiangsu 211106 (CN)
(74) Representative: Sun, Yiming
(86) International application number: PCT/CN2024/104698
(87) International publication number: WO 2025/020927

(57) **Abstract**

Provided is a robotic lawn mower. The robotic lawn mower includes a drive assembly including a blade and a driving electric motor for driving the blade; a traveling assembly including traveling wheels and a traveling electric motor for driving the traveling wheels; a camera assembly configured to collect a two-dimensional image around the robotic lawn mower; and a processor communicatively or electrically connected to the camera assembly and configured to control an action of the robotic lawn mower according to at least the two-dimensional image; where the processor is further configured to identify a poor road condition in the two-dimensional image through semantic segmentation, where the poor road condition is one of multiple preset types of poor road conditions; verify the poor road condition according to a three-dimensional point cloud to obtain a verification result; and plan a traveling route of the robotic lawn mower according to the verification result.

## Description

This application claims priority to Chinese Patent Application No. 202310908086.7 filed with the China National Intellectual Property Administration (CNIPA) on Jul. 24, 2023, the disclosure of which is incorporated herein by reference in its entirety.

### TECHNICAL FIELD

The present application relates to the technical field of garden tools and, in particular, to a robotic lawn mower.

### BACKGROUND

As a commonly used garden tool, a lawn mower can be used for lawn trimming. Specifically, the lawn mower may perform mowing within a working region enclosed by a boundary line. With advancements in related technologies, to satisfy the increasing requirements of users and provide more intelligent and diversified services, the lawn mower has gradually evolved into a robotic lawn mower.

The robotic lawn mower has multiple functions such as path planning, object recognition, and obstacle avoidance and can be prevented from problems such as collisions and repetitive work. Compared with the conventional lawn mower, the robotic lawn mower can significantly improve the working efficiency and reduce power consumption and is more user-friendly in terms of both cost and user experience.

This part provides background information related to the present application, and the background information is not necessarily the existing art.

### SUMMARY

An object of the present application is to solve or at least alleviate part or all of the preceding problems. Therefore, an object of the present application is to provide a robotic lawn mower.

To achieve the preceding object, the present application adopts the technical solutions below.

A robotic lawn mower includes a drive assembly including a blade and a driving electric motor for driving the blade; a traveling assembly including traveling wheels and a traveling electric motor for driving the traveling wheels; a sensor assembly configured to collect environmental information around the robotic lawn mower; and a processor communicatively or electrically connected to the sensor assembly and configured to control an action of the robotic lawn mower based on at least the environmental information collected by the sensor assembly. The processor is further configured to identify an obstacle and determine whether the obstacle is static or dynamic based on the environmental information collected by the sensor assembly; use a first map for navigation when the obstacle is determined to be dynamic; and use a second map for navigation when the obstacle is determined to be static.

In some examples, the second map is a partial map which is a map within a certain distance around a real-time position of the robotic lawn mower.

In some examples, the second map is updated in real time during movement of the robotic lawn mower.

In some examples, the first map is a complete-area map which is an overall map of a working region of the robotic lawn mower.

**In** some examples, the second map has a higher resolution than the first map.

**In** some examples, the processor is further configured to control the traveling electric motor to drive the traveling wheels at a first speed when using the first map for navigation and control the traveling electric motor to drive the traveling wheels at a second speed when using the second map for navigation.

**In** some examples, the sensor assembly includes a camera assembly configured to collect an environmental image around the robotic lawn mower.

**In** some examples, the processor is configured to identify an obstacle in the environmental image and a type of the obstacle by using a semantic segmentation algorithm and determine the obstacle to be dynamic when the obstacle is identified as a human or an animal.

**In** some examples, the processor is configured to detect whether an object in the environmental image is dynamic by an optical flow method or a target tracking method.

**In** some examples, the sensor assembly includes one or more of a binocular camera, a laser radar (LiDAR), or an infrared sensor.

A robotic lawn mower includes a drive assembly including a blade and a driving electric motor for driving the blade; a traveling assembly including traveling wheels and a traveling electric motor for driving the traveling wheels; a sensor assembly configured to collect environmental information around the robotic lawn mower; a memory configured to store a complete-area map of a working region of the robotic lawn mower; and a processor communicatively or electrically connected to the sensor assembly and the memory and configured to control an action of the robotic lawn mower based on at least the environmental information collected by the sensor. The processor is further configured to construct a partial map around a real-time position of the robotic lawn mower based on the environmental information collected by the sensor assembly, where the partial map has a higher resolution than the complete-area map.

In some examples, the partial map contains more types of map attributes than the complete-area map.

In some examples, a resolution of the partial map is greater than or equal to 1 cm and less than or equal to 20 cm.

In some examples, the processor is configured to map, based on the real-time position of the robotic lawn mower, map information in the complete-area map to the partial map.

In some examples, a shape of the partial map is fixed, and the distance between a boundary of the partial map and the real-time position of the robotic lawn mower is less than or equal to 5 m.

In some examples, the processor is further configured to plan a traveling route of the robotic lawn mower based on the complete-area map and the partial map and control the traveling electric motor based on the traveling route.

In some examples, the partial map is composed of multiple map grids having different resolutions.

In some examples, a map grid closer to the real-time position of the robotic lawn mower among the multiple map grids has a higher resolution.

In some examples, the sensor assembly includes at least one of a vision sensor, a collision sensor, an inertial sensor, a laser radar, or an odometer.

In some examples, the processor is configured to update the partial map in real time.

A robotic lawn mower includes a drive assembly including a blade and a driving electric motor for driving the blade; a traveling assembly including traveling wheels and a traveling electric motor for driving the traveling wheels; a sensor assembly including at least one of a vision sensor, a collision sensor, an inertial sensor, an odometer, or a laser radar; a memory configured to store a map of a working region of the robotic lawn mower, where the map is divided into multiple map grids; and a processor communicatively or electrically connected to the sensor assembly and the memory and configured to control an action of the robotic lawn mower based on at least environmental information collected by the sensor assembly. The processor is further configured to determine a road condition based on the environmental information collected by the sensor assembly, the road condition being at least one of multiple preset types of road conditions; and record the road condition on a map grid corresponding to the road condition in the map. The processor further includes a road condition update module configured to update the road condition on the corresponding map grid in the map based on environmental information newly collected by the sensor assembly.

In some examples, the robotic lawn mower further includes a human-machine interaction assembly configured for a user to update road conditions on one or more map grids in the map through human-machine interaction.

In some examples, the multiple preset types of road conditions include at least two of a bumpy region, a pit region, a ramp region, a non-grass region, an obstacle-prone region, a slippery region, and an easily trapped region.

In some examples, the processor is further configured to record a road condition probability corresponding to the road condition on the map grid corresponding to the road condition in the map; and the road condition update module is further configured to update the road condition probability on the corresponding map grid in the map based on the environmental information newly collected by the sensor assembly.

In some examples, the processor is further configured to filter the environmental information collected by the sensor assembly based on temporal attributes and spatial attributes of the environmental information collected by the sensor assembly; and the road condition update module is configured to update the road condition and the road condition probability based on the filtered environmental information collected by the sensor assembly.

In some examples, the processor is further configured to determine a cost value of each map grid based on the road condition and the road condition probability on the map grid and plan a traveling path of the robotic lawn mower based on the cost value of each map grid.

In some examples, the memory is further configured to store at least one second map attribute of grids in the map; and the processor is further configured to adjust the traveling path based on the at least one second map attribute.

In some examples, each second map attribute among the at least one second map attribute includes at least one of mowing, lifting, a collision, a boundary, an obstacle, or a charging pile.

In some examples, the processor is configured to control, based on the cost value and/or the at least one second map attribute, the traveling electric motor to drive the traveling wheels at different speeds.

A robotic lawn mower includes a drive assembly including a blade and a driving electric motor for driving the blade; a traveling assembly including traveling wheels and a traveling electric motor for driving the traveling wheels; a sensor assembly configured to collect environmental information around the robotic lawn mower; a memory configured to store a complete-area map of a working region of the robotic lawn mower; and a processor communicatively or electrically connected to the sensor assembly and the memory and configured to control an action of the robotic lawn mower based on at least the environmental information collected by the sensor. The processor is further configured to map, based on a real-time position of the robotic lawn mower, map information in the complete-area map to an initial partial map around the real-time position, update the initial partial map by using the environmental information collected by the sensor assembly to generate a partial map around the real-time position, and control the traveling electric motor based on the complete-area map and the partial map.

A robotic lawn mower includes a drive assembly including a blade and a driving electric motor for driving the blade; a traveling assembly including traveling wheels and a traveling electric motor for driving the traveling wheels; a camera assembly configured to collect a two-dimensional image around the robotic lawn mower; and a processor communicatively or electrically connected to the camera assembly and configured to control an action of the robotic lawn mower based on at least the two-dimensional image. The processor is further configured to identify a poor road condition in the two-dimensional image through semantic segmentation, where the poor road condition is one of multiple preset types of poor road conditions; verify the poor road condition based on a three-dimensional point cloud to obtain a verification result; and plan a traveling route of the robotic lawn mower according to the verification result.

In some examples, the processor is further configured to perform avoidance or deceleration in response to the verified poor road condition.

In some examples, the multiple preset types of poor road conditions include at least two of a pothole, a water area, and a haystack.

In some examples, the camera assembly includes at least a first camera and a second camera, and the processor is further configured to generate the three-dimensional point cloud based on at least two two-dimensional images.

In some examples, the robotic lawn mower further includes a sensor assembly communicatively or electrically connected to the processor and configured to collect environmental information around the robotic lawn mower to generate the three-dimensional point cloud and transmit the three-dimensional point cloud to the processor.

In some examples, the processor is configured to determine depth information of the poor road condition and depth information of a traveling plane of the robotic lawn mower based on the three-dimensional point cloud and verify the poor road condition based on the depth information of the poor road condition and the depth information of the traveling plane.

In some examples, the processor is configured to determine the depth information of the poor road condition based on coordinate information of the poor road condition in the two-dimensional image and a registration relationship between the two-dimensional image and the three-dimensional point cloud.

In some examples, the processor is configured to obtain a bounding box of the poor road condition through the semantic segmentation, and the coordinate information of the poor road condition is coordinate information of a region within the bounding box in the two-dimensional image.

In some examples, the processor is configured to determine the depth information of the traveling plane based on coordinate information of the traveling plane within a certain distance around a position of the poor road condition in the two-dimensional image and a registration relationship between the two-dimensional image and the three-dimensional point cloud.

In some examples, the processor is configured to obtain a bounding box of the poor road condition through the semantic segmentation, and the coordinate information of the traveling plane is coordinate information of a region outside the bounding box in the two-dimensional image.

In some examples, the processor is configured to, when the depth information of the traveling plane does not conform to preset plane depth information, determine that the poor road condition fails to be verified.

In some examples, the processor is configured to, when a depth relationship between the depth information of the poor road condition and the depth information of the traveling plane conforms to a preset depth relationship corresponding to a type of the poor road condition, determine that the poor road condition is verified successfully.

A robotic lawn mower includes a drive assembly including a blade and a driving electric motor for driving the blade; a traveling assembly including traveling wheels and a traveling electric motor for driving the traveling wheels; a camera assembly including a first camera and a second camera, where the first camera is configured to collect a first environmental image around the robotic lawn mower, the second camera is configured to collect a second environmental image around the robotic lawn mower, and the first environmental image and the second environmental image are two-dimensional images; and a processor communicatively or electrically connected to the camera assembly and configured to control an action of the robotic lawn mower based on at least the first environmental image and the second environmental image. The processor is further configured to separately identify objects included in the first environmental image and the second environmental image through semantic segmentation; associate duplicate objects in the first environmental image and the second environmental image; perform stereo matching on the duplicate objects in the first environmental image and the second environmental image to acquire depth information of the duplicate objects; and control the traveling electric motor based on identification results and the depth information of the duplicate objects.

**In** some examples, the first camera is disposed on the left side of the second camera.

**In** some examples, the first camera and the second camera form a binocular camera.

**In** some examples, the first camera or the second camera is a fisheye camera.

**In** some examples, the camera assembly further includes a structured light camera and/or a time-of-flight (ToF) camera.

A robotic lawn mower includes a drive assembly including a blade and a driving electric motor for driving the blade; a traveling assembly including traveling wheels and a traveling electric motor for driving the traveling wheels; a camera assembly configured to collect an environmental image around the robotic lawn mower, where the environmental image is a two-dimensional image or a three-dimensional image; and a processor communicatively or electrically connected to the camera assembly and configured to control an action of the robotic lawn mower based on at least the environmental image. The processor is further configured to cluster pixel points or voxel points in the environmental image to obtain a pixel set or a voxel set corresponding to each object included in the environmental image; when a dimension of the pixel set or the voxel set is less than or equal to a first threshold, delete the pixel set or the voxel set; and when the dimension of the pixel set or the voxel set is greater than or equal to a second threshold, identify a type of the object corresponding to the pixel set or the voxel set, and control the traveling electric motor based on the type of the object.

In some examples, the processor is configured to cluster the pixel points or the voxel points in the environmental image using a k-means algorithm or a region growing algorithm.

In some examples, the camera assembly includes at least two cameras, and the processor is configured to perform stereo matching on two two-dimensional environmental images collected by the two cameras at the same moment to generate a corresponding three-dimensional environmental image.

In some examples, the processor is configured to convert the pixel set into the corresponding voxel set based on a camera parameter of the camera assembly.

In some examples, the dimension is the length of a planar diagonal of a bounding box of the pixel set or the length of a three-dimensional diagonal of a bounding box of the voxel set.

In some examples, the dimension is one of the length, the width, or the height of a bounding box of the pixel set or the voxel set.

**In** some examples, the dimension is a maximum value of the distance between two pixel points or two voxel points in the pixel set or the voxel set.

**In** some examples, the first threshold is less than or equal to 5 cm.

A robotic lawn mower includes a drive assembly including a blade and a driving electric motor for driving the blade; a traveling assembly including traveling wheels and a traveling electric motor for driving the traveling wheels; a camera assembly configured to collect an environmental image around the robotic lawn mower, where the environmental image is a two-dimensional image or a three-dimensional image; and a processor communicatively or electrically connected to the camera assembly and configured to control an action of the robotic lawn mower based on at least the environmental image. The processor is further configured to cluster pixel points or voxel points in the environmental image to obtain a pixel set or a voxel set corresponding to each object included in the environmental image; when a set parameter of the pixel set or the voxel set is less than or equal to a parameter threshold, delete the pixel set or the voxel set; and when the set parameter of the pixel set or the voxel set is greater than or equal to the parameter threshold, identify a type of the object corresponding to the pixel set or the voxel set, and control the traveling electric motor based on the type of the object.

**In** some examples, the set parameter is the number of pixel points or the number of voxel points.

**In** some examples, the parameter threshold corresponding to the number of voxel points is 15.

A robotic lawn mower includes a drive assembly including a blade and a driving electric motor for driving the blade; a traveling assembly including traveling wheels and a traveling electric motor for driving the traveling wheels; a sensor assembly configured to collect environmental information around the robotic lawn mower; a first processor configured to identify an obstacle and determine a coordinate set of the obstacle based on the environmental information; and a second processor configured to control an action of the robotic lawn mower. The first processor is further configured to determine representative coordinates of the obstacle based on the coordinate set of the obstacle and transmit the representative coordinates to the second processor. The second processor is further configured to control the traveling electric motor based on the representative coordinates of the obstacle.

In some examples, the sensor assembly includes a camera assembly configured to collect an environmental image around the robotic lawn mower.

In some examples, the first processor is a graphics processing unit (GPU), and the second processor is a central processing unit (CPU).

In some examples, the first processor is further configured to identify a type of the obstacle in the environmental image and transmit the type of the obstacle and the representative coordinates of the obstacle to the second processor.

In some examples, the representative coordinates are coordinates of vertices of a three-dimensional diagonal of a bounding box of the obstacle.

In some examples, the representative coordinates are coordinates of vertices of a planar diagonal of a bounding box of the obstacle.

In some examples, the sensor assembly includes a binocular camera and/or a laser radar (LiDAR).

In some examples, a data volume of the representative coordinates is less than or equal to 100 bytes.

A control method for a robotic lawn mower includes the following: a sensor assembly collects environmental information around the robotic lawn mower; a processor identifies an obstacle and determines whether the obstacle is static or dynamic based on the environmental information; when the obstacle is determined to be dynamic, the processor uses a first map for navigation; and when the obstacle is determined to be static, the processor uses a second map for navigation.

A control method for a robotic lawn mower includes the following: a sensor assembly collects environmental information around the robotic lawn mower; and a processor constructs a partial map around a real-time position of the robotic lawn mower based on the environmental information, where the partial map has a higher resolution than a complete-area map stored in a memory.

A control method for a robotic lawn mower includes the following: a sensor assembly collects environmental information around the robotic lawn mower; a processor determines a road condition based on the environmental information and records the road condition on a map grid corresponding to the road condition in a map, where the road condition is at least one of multiple preset types of road conditions, and the map is stored in a memory and divided into multiple map grids; and the processor further updates the road condition on the corresponding map grid in the map based on environmental information newly collected by the sensor assembly.

A control method for a robotic lawn mower includes the following: a sensor assembly collects environmental information around the robotic lawn mower; a processor maps, based on a real-time position of the robotic lawn mower, map information in a complete-area map to an initial partial map around the real-time position, where the complete-area map is stored in a memory; and the processor further updates the initial partial map by using the environmental information collected by the sensor assembly to generate a partial map around the real-time position and controls a traveling electric motor based on the complete-area map and the partial map.

A control method for a robotic lawn mower includes the following: a camera assembly collects a two-dimensional image around the robotic lawn mower; a processor identifies a poor road condition in the two-dimensional image through semantic segmentation, where the poor road condition is one of multiple preset types of poor road conditions; and the processor further verifies the poor road condition based on a three-dimensional point cloud to obtain a verification result and plans a traveling route of the robotic lawn mower based on the verification result.

A control method for a robotic lawn mower includes the following: a first camera in a camera assembly collects a first environmental image around the robotic lawn mower, and a second camera in the camera assembly collects a second environmental image around the robotic lawn mower, where the first environmental image and the second environmental image are two-dimensional images; a processor separately identifies objects included in the first environmental image and the second environmental image through semantic segmentation and associates duplicate objects in the first environmental image and the second environmental image; and the processor further performs stereo matching on the duplicate objects in the first environmental image and the second environmental image to acquire depth information of the duplicate objects and controls a traveling electric motor based on identification results and the depth information of the duplicate objects.

A control method for a robotic lawn mower includes the following: a camera assembly collects an environmental image around the robotic lawn mower, where the environmental image is a two-dimensional image or a three-dimensional image; a processor clusters pixel points or voxel points in the environmental image to obtain a pixel set or a voxel set corresponding to each object included in the environmental image; when a set parameter of the pixel set or the voxel set is less than or equal to a parameter threshold, the processor deletes the pixel set or the voxel set; and when the set parameter of the pixel set or the voxel set is greater than or equal to the parameter threshold, the processor identifies a type of the object corresponding to the pixel set or the voxel set and controls a traveling electric motor based on the type of the object.

A control method for a robotic lawn mower includes the following: a sensor assembly collects environmental information around the robotic lawn mower; a first processor identifies an obstacle and determines a coordinate set of the obstacle based on the environmental information; the first processor further determines representative coordinates of the obstacle based on the coordinate set of the obstacle and transmits the representative coordinates to a second processor; and the second processor controls a traveling electric motor based on the representative coordinates of the obstacle.

### BRIEF DESCRIPTION OF DRAWINGS

FIG. 1 is a perspective view of a robotic lawn mower as an example.
FIG. 2 is a perspective view of part of the internal structure of the robotic lawn mower shown in FIG. 1.
FIG. 3 is an electrical control schematic of a sensor assembly and a processor in the robotic lawn mower shown in FIG. 1.
FIG. 4 is a schematic diagram of a working region of a robotic lawn mower as an example.
FIG. 5 is a schematic diagram of a first map of a robotic lawn mower as an example.
FIG. 6 is a schematic diagram of a second map of a robotic lawn mower as an example.
FIG. 7 is a schematic diagram of a partial map of a robotic lawn mower as an example.
FIG. 8 is an electrical control schematic of a sensor assembly, a memory, and a processor in the robotic lawn mower shown in FIG. 1.
FIG. 9 is an electrical control schematic of a sensor assembly, a first processor, and a second processor in the robotic lawn mower shown in FIG. 1.

### Reference list:

- 100: robotic lawn mower
- 10: drive assembly
- 20: traveling assembly
- 30: sensor assembly/camera assembly
- 40: processor
- 50: memory
- 11: blade
- 12: driving electric motor
- 21: traveling wheel
- 22: traveling electric motor
- 41: first processor
- 42: second processor

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

As a new outdoor traveling power tool, a robotic lawn mower is increasingly favored by users due to its advantages of intelligence and high efficiency. In a to-be-mowed target region, a conventional lawn mower needs to be pushed by a user to travel, while the robotic lawn mower can autonomously plan a path and perform mowing along the planned path. Moreover, the robotic lawn mower can implement functions such as object recognition and obstacle avoidance in a traveling process.

The technical solutions of the present application are described below in detail in conjunction with the drawings and examples.

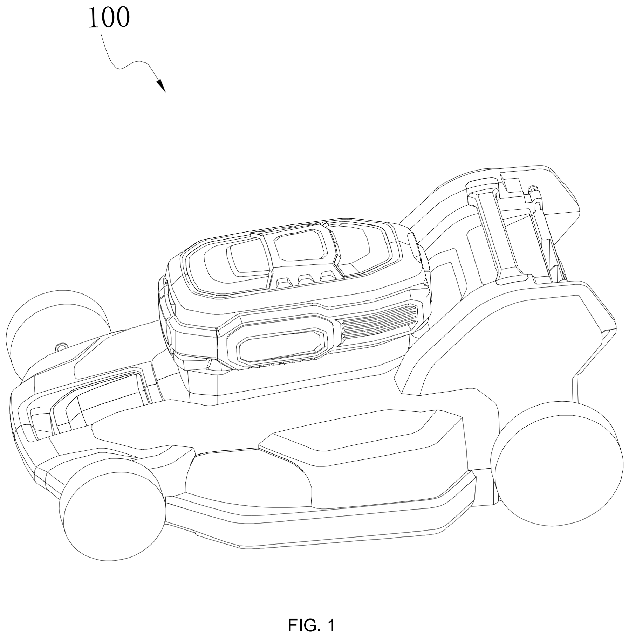

FIG. 1 shows a robotic lawn mower 100 as an example of the present application. It is to be understood that the technical solutions of the present application may be selectively applied to other outdoor traveling power tools such as a robotic snow thrower to adapt to different scenario requirements.

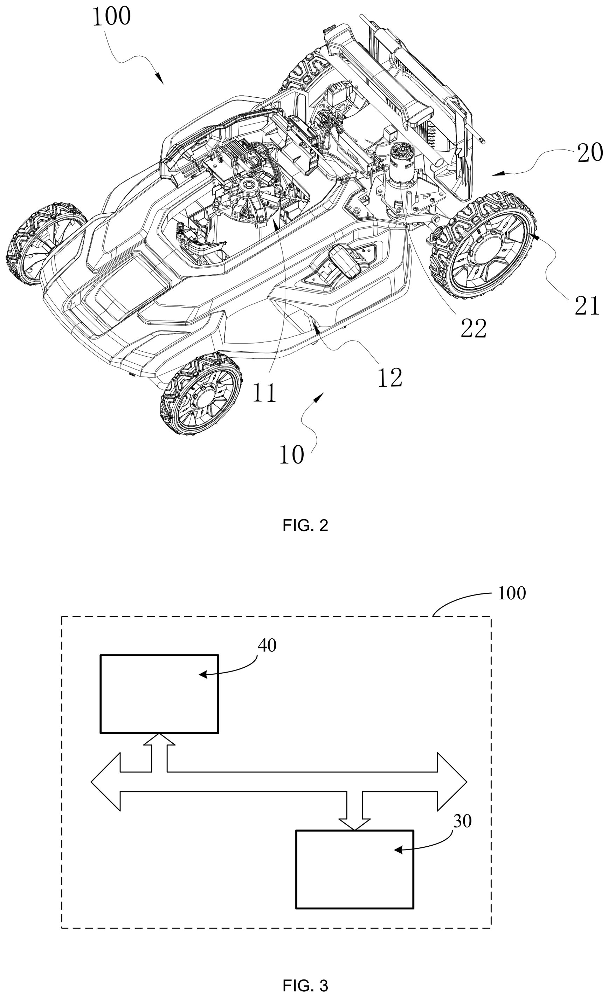

Referring to FIGS. 1 and 2, the robotic lawn mower 100 includes a drive assembly 10 and a traveling assembly 20. The drive assembly 10 includes a blade 11 and a driving electric motor 12 for driving the blade. After rotation, a motor shaft of the driving electric motor transmits power to a first output shaft directly or indirectly via a first transmission assembly to drive the blade to perform mowing. The traveling assembly 20 includes traveling wheels 21 and a traveling electric motor 22 for driving the traveling wheels. After rotation, a motor shaft of the traveling electric motor transmits power to a second output shaft directly or indirectly via a second transmission assembly to drive the traveling wheels to travel on a planned traveling path. In some examples, the traveling electric motor may be a hub motor in which power, transmission, and braking-related devices are all integrated into a wheel hub.

Referring to FIG. 3, the robotic lawn mower 100 further includes a sensor assembly 30 and a processor 40. The sensor assembly 30 may include one or more of a vision sensor, a collision sensor, an inertial sensor, an electromagnetic sensor, a laser radar, or an odometer. The specific number of sensors of various types included in the sensor assembly 30 is not limited. It is to be understood that the sensor assembly 30 may further include other types of sensors, which are not listed above.

The sensor assembly 30 is configured to collect environmental information around the robotic lawn mower 100. In some examples, the sensor assembly 30 may collect environmental information within a preset distance range centered at the current real-time position of the robotic lawn mower 100. The environmental information may be presented in the form of a one-dimensional signal, a two-dimensional image, or a three-dimensional point cloud.

In some examples, the sensor assembly 30 may include the vision sensor such as a camera assembly, an infrared sensor, or a linear optical sensor, which can collect an environmental image within a field of view of the sensor when the robotic lawn mower 100 is at the current real-time position in a current pose. In some other examples, the sensor assembly 30 may include the laser radar (LiDAR), which can collect a laser point cloud around the robotic lawn mower 100 within a radiation range of the sensor. It is to be noted that in some cases, the sensor assembly 30 such as a binocular camera may transmit collected two-dimensional images to the processor 40, and then the processor 40 may generate a three-dimensional image from the two-dimensional images. In some other examples, the sensor assembly 30 may include the inertial sensor, which can detect data such as a three-axis acceleration of the robotic lawn mower 100.

The processor 40 may be a central processing unit (CPU) or a microcontroller unit (MCU), which reads and executes various executable instructions to control actions of the robotic lawn mower 100.

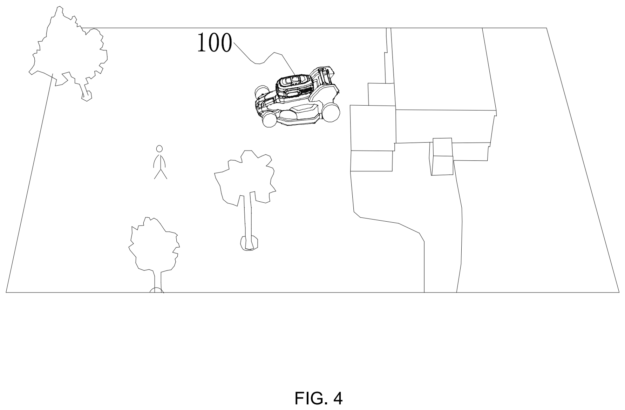

Referring to FIG. 4, FIG. 4 shows a working region of the robotic lawn mower 100. To restrict the robotic lawn mower 100 to moving only within the working region to be mowed, the working region generally has a boundary line. In some examples, the boundary line may be a physical boundary line. In some other examples, the boundary line may be a virtual boundary line implemented in conjunction with software. Both the physical boundary line and the virtual boundary line can each enclose the working region of the robotic lawn mower 100. A specific shape of the working region is not limited. For example, the working region may be a rectangular region or another irregularly shaped region.

The robotic lawn mower 100 generally performs mowing with the aim of covering the working region. To achieve effective path planning, the robotic lawn mower 100 needs to construct a map corresponding to the working region. In some simple examples, the robotic lawn mower 100 may always use the same pre-stored map for navigation. However, such maps provide limited information with poor timeliness, which is not conducive to the path planning and obstacle avoidance of the robotic lawn mower 100.

In an example, the robotic lawn mower 100 includes at least the drive assembly 10, the traveling assembly 20, the sensor assembly 30, and the processor 40. The sensor assembly 30 collects the environmental information near the real-time position of the robotic lawn mower 100. The processor 40 is electrically or communicatively connected to the sensor assembly 30 and can acquire the environmental information collected by the sensor assembly 30. In some examples, the processor 40 may periodically receive the environmental information corresponding to the real-time position of the robotic lawn mower 100 from the sensor assembly 30. For example, the processor 40 may periodically receive the environmental information collected by the sensor assembly 30, where the period is 100 ms. Then, the processor 40 may interact with the sensor assembly 30 about the environmental information ten times within 1s, where the environmental information in ten interactions may be environmental information corresponding to the same position of the robotic lawn mower 100 or environmental information corresponding to different positions of the robotic lawn mower 100.

After obtaining the environmental information corresponding to the real-time position of the robotic lawn mower 100, the processor 40 may identify an obstacle near the real-time position of the robotic lawn mower 100 and determine whether the obstacle is dynamic or static based on the environmental information. A dynamic obstacle may be a human, an animal, or another electronic device traveling near the robotic lawn mower 100. A static obstacle may be an unmoving obstacle such as a step, a tree, or a bench.

When determining that the obstacle around the robotic lawn mower 100 is dynamic, the processor 40 may call a first map to navigate the robotic lawn mower 100. Specifically, the processor 40 may call the first map, plan a first traveling path under the first map, and control the traveling electric motor 22 based on the first traveling path so that the robotic lawn mower 100 travels on the first traveling path. In some cases, the processor 40 also controls the driving electric motor 12 based on the first map so that the robotic lawn mower 100 adjusts a cutting state of the blade and the like on the first traveling path.

When determining that the obstacle around the robotic lawn mower 100 is static, the processor 40 may call a second map to navigate the robotic lawn mower 100. Specifically, the processor 40 may call the second map, plan a second traveling path under the second map, and control the traveling electric motor 22 based on the second traveling path so that the robotic lawn mower 100 travels on the second traveling path. In some cases, the processor 40 also controls the driving electric motor 12 based on the second map so that the robotic lawn mower 100 adjusts the cutting state of the blade and the like on the second path.

In some examples, the processor 40 may be further provided with a map pointer, and the processor 40 may use the map pointer to call the corresponding map in response to a map switching requirement.

As shown in FIG. 4, multiple objects of different types may be included in the working region of the robotic lawn mower 100, where an object may be a dynamic obstacle, a static obstacle, the background such as the air or the ground, or a particular road condition such as a pothole or a bump. The processor 40 may identify types of the objects in the working region or identify objects of one or more particular types in the working region by using different algorithms to adapt to practical scenario requirements.

In some examples, the sensor assembly 30 includes the camera assembly, and the camera assembly may collect an environmental image around the robotic lawn mower 100. The processor 40 may identify an obstacle in the environmental image and determine a type of the obstacle by using a semantic segmentation algorithm. When the type of the obstacle is the human, the animal, or another traveling electronic device, the processor 40 may determine the obstacle to be dynamic. In some examples, a dynamic or static obstacle in a three-dimensional environmental image may be identified by a geometric analysis method. In some other examples, the processor 40 may detect whether a dynamic object is included in the environmental image by an optical flow method or a multi-frame target tracking method.

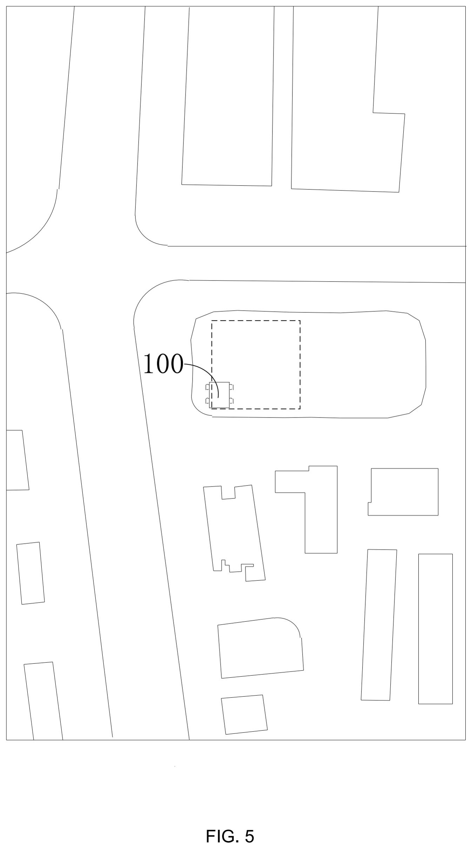

Referring to FIG. 5, in some examples, the first map is a complete-area map, which is a map of the entire working region where the robotic lawn mower 100 is to perform mowing. When the dynamic obstacle such as the human or the animal appears around the robotic lawn mower 100, the dynamic obstacle can move within a large range and may affect a broader region range. In the case where the robotic lawn mower 100 performs mowing along a zigzag path, the processor 40 may call the complete-area map and re-plan a global traveling path under the complete-area map.

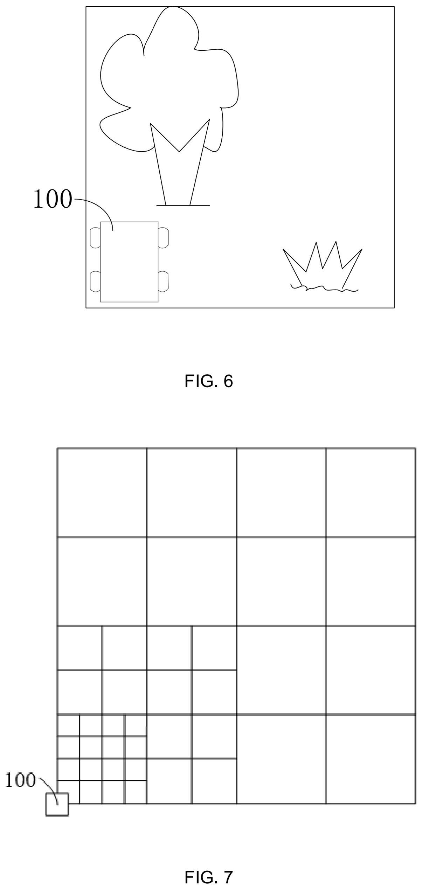

Referring to FIG. 6, in some examples, the second map is a partial map, which is a map of a partial working region within a certain distance around the real-time position of the robotic lawn mower 100. In some examples, the partial map may be a map of a partial working region with the origin being the real-time position of the robotic lawn mower 100 and an axis being a traveling direction of the robotic lawn mower 100. In some other examples, the partial map may be a map of a partial working region centered at the real-time position of the robotic lawn mower 100 and within a preset distance threshold from the center. When the static obstacle such as the tree or the step appears around the robotic lawn mower 100, since the static obstacle is relatively fixed in position, the processor 40 may call the partial map and re-plan a local traveling path under the partial map.

Additionally, when the complete-area map or the partial map is called for navigation, the path planning may also be performed in conjunction with other attributes of the dynamic obstacle or the static obstacle. For example, for the obstacle such as the tree or a flowerbed, when calling the partial map for navigation, the processor 40 may control the traveling electric motor 22 to enable the robotic lawn mower 100 to perform circular mowing around the tree or the flowerbed; for the obstacle such as the step or the boundary line, when calling the partial map for navigation, the processor 40 may control the traveling electric motor 22 to enable the robotic lawn mower 100 to perform edge mowing along the step or the boundary line.

In some examples, the second map has a higher resolution than the first map. In some examples, a resolution of the partial map may be greater than or equal to 1 cm and less than or equal to 20 cm, and a resolution of the complete-area map may be greater than or equal to 15 cm and less than or equal to 50 cm. In some other examples, the resolution of the partial map may be greater than or equal to 1 cm and less than or equal to 15 cm, and the resolution of the complete-area map may be greater than or equal to 15 cm and less than or equal to 30 cm. It is to be understood that the resolution of the first map and the resolution of the second map should adapt to a size of the current working region of the robotic lawn mower 100.

In some examples, the second map contains more map attributes than the first map. In some examples, the environmental information around the real-time position of the robotic lawn mower 100 and collected by the sensor assembly 30 may be entirely recorded in the partial map and partially recorded in the complete-area map. For example, three-axis acceleration data detected by the inertial sensor and mileage data collected by the odometer may be recorded in the partial map and not recorded in the complete-area map.

In some examples, the second map is updated in real time during movement of the robotic lawn mower 100. For example, assuming that the robotic lawn mower 100 travels at a speed of 0.5 m/s, the second map may be periodically updated with a period of 100 ms, that is, the partial map is updated once each time the robotic lawn mower 100 travels 5 cm.

In some examples, the processor 40 controls the traveling electric motor 22 to drive the traveling wheels at a first speed when using the first map for navigation and controls the traveling electric motor 22 to drive the traveling wheels at a second speed when using the second map for navigation. In some examples, the first speed may be lower than the second speed. For example, a traveling speed of the robotic lawn mower 100 when the complete-area map is used for navigation may be lower than a traveling speed of the robotic lawn mower 100 when the partial map is used for navigation, so as to ensure the safety of the robotic lawn mower 100 in the case of the dynamic obstacle. In some other examples, the traveling speed of the robotic lawn mower 100 may be further adjusted in conjunction with other map attributes.

In some examples, the sensor assembly 30 includes one or more of the binocular camera, the laser radar (LiDAR), or the infrared sensor.

In the robotic lawn mower described in the preceding examples, based on whether the obstacle near the real-time position of the robotic lawn mower is dynamic or static, different maps are selected and switched between for navigation so that the used map can adapt to different characteristics of dynamic and static obstacles and the requirements for path planning and obstacle avoidance in the scenarios of dynamic and static obstacles, thereby improving the working efficiency and effect of the robotic lawn mower.

In an example, the robotic lawn mower 100 includes at least the drive assembly 10, the traveling assembly 20, the sensor assembly 30, a memory 50, and the processor 40. The memory 50 stores the complete-area map of the working region of the robotic lawn mower 100. In some examples, the memory 50 may be a read-only memory (ROM), a random-access memory (RAM), or a flash memory. In some other examples, the memory 50 may be a remote memory. The complete-area map is a map of the entire working region where the robotic lawn mower 100 is to perform mowing and may record relatively stable information in the entire working region in a relatively concise manner.

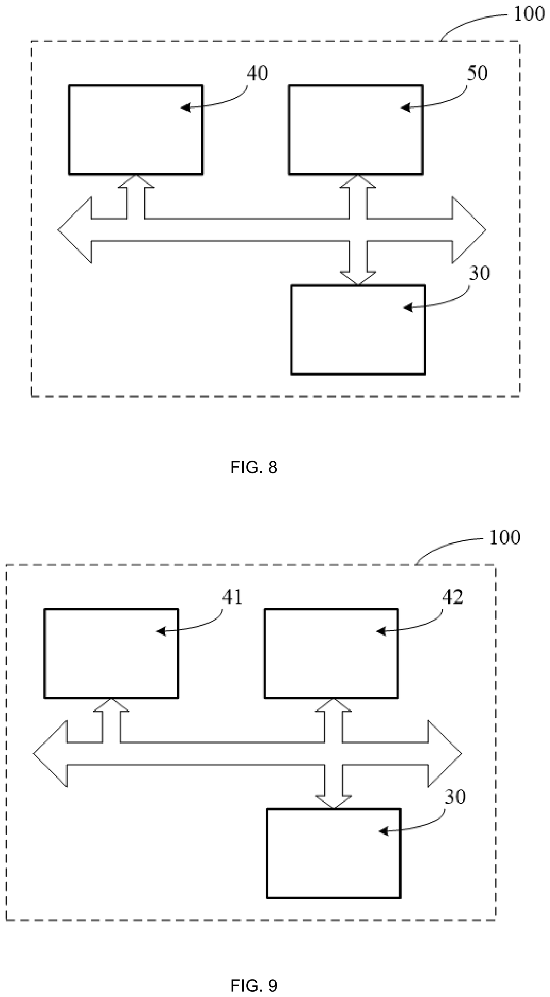

Referring to FIG. 8, the processor 40 is electrically or communicatively connected to the sensor assembly 30 and the memory 50 and can acquire the complete-area map stored in the memory 50 and various environmental information collected by the sensor assembly 30. In some examples, the processor 40 may periodically receive various environmental information collected by the sensor assembly 30, where different sensors may send environmental information with the same period or different periods.

After obtaining various environmental information, the processor 40 may construct the partial map around the real-time position of the robotic lawn mower 100 based on the various environmental information. The partial map has the higher resolution than the complete-area map and can record, in more detail, information that is more likely to fluctuate in the partial working region corresponding to the real-time position of the robotic lawn mower 100. Specifically, the processor 40 may identify the obstacle based on the environmental image from the vision sensor and construct a partial map containing a position and a type of the obstacle, construct a partial map containing depth information of objects based on the laser point cloud from the laser radar (LiDAR), or construct a partial map containing the traveling speed and direction of the robotic lawn mower 100 based on the three-axis acceleration data from the inertial sensor.

In some examples, the partial map may be in a fixed shape, that is, the partial map is in a preset shape. In some examples, the shape of the partial map may be a square. In some other examples, the shape of the partial map may be a circle.

In some examples, the partial map may be constructed with the origin being the real-time position of the robotic lawn mower 100 and the axis being the traveling direction of the robotic lawn mower 100. In some examples, the partial map may be a 4 m × 4 m, 3 m × 3 m, 5 m × 5 m, or 6 m × 6 m square map with the origin being the real-time position of the robotic lawn mower 100. The side of the partial map may be adaptively adjusted depending on the area of the working region of the robotic lawn mower and the traveling speed of the robotic lawn mower. For example, the greater the area of the working region and the higher the traveling speed of the robotic lawn mower, the greater the side of the partial map, and vice versa. In some other examples, the partial map may be a map of a working region centered at the real-time position of the robotic lawn mower 100 and within a preset distance threshold from the center. For example, a boundary of the partial map may be a circle with the center being the real-time position of the robotic lawn mower 100 and the radius being the preset distance threshold. In some examples, the preset distance threshold may be 4 m, 3 m, 5 m, or 6 m. It is to be understood that in the case where the working region has the boundary line, a region covered by the partial map may not exceed the boundary line, that is, a partial map corresponding to a region beyond the boundary line may not be constructed.

As shown in FIGS. 5 and 6, the complete-area map or the partial map is composed of multiple map grids, and a map resolution represents a size of a map grid. In some cases, the map grid may be square, and the map resolution may be expressed as the side of the map grid. The resolution of the map grid described hereinafter refers to the side of the map grid. In this example, the partial map has the higher resolution than the complete-area map. In some examples, the resolution of the partial map may be 5 cm, and the resolution of the complete-area map may be 15 cm.

In some examples, the multiple map grids in the partial map may have different resolutions.

Referring to FIG. 7, in some examples, the resolutions of the multiple map grids in the partial map may vary with the distance between the map grid and the real-time position of the robotic lawn mower 100. A map grid closer to the real-time position of the robotic lawn mower 100 has the higher resolution, that is, the map grid closer to the real-time position of the robotic lawn mower 100 in the partial map has the smaller side, and a map grid farther from the real-time position of the robotic lawn mower 100 has the larger side.

In some other examples, in addition to variations with the distance between the map grid and the real-time position of the robotic lawn mower 100, a resolution threshold may be set. When the resolution of the map grid reaches the resolution threshold, that is, when the grid side reaches a maximum value, the map resolution is no longer decreased even if the map grid is farther from the real-time position of the robotic lawn mower 100.

The resolution of the partial map may be adjusted to adapt to the area of the partial map, the area of the working region of the robotic lawn mower 100, a working accuracy, and other requirements. In some examples, the map grid in the partial map may have a maximum resolution of 1 cm and a minimum resolution of 15 cm.

In some examples, the partial map contains more types of map attributes than the complete-area map. In some examples, the complete-area map may not record information about the dynamic obstacle, while the partial map records the information about the dynamic obstacle. In some other examples, the complete-area map may not record the mileage data and the traveling speed, while the partial map records the mileage data and the traveling speed.

In some examples, during movement of the robotic lawn mower 100, as the real-time position of the robotic lawn mower 100 changes, the processor 40 updates the partial map corresponding to the current real-time position in real time. For example, assuming that the traveling speed of the robotic lawn mower 100 is 0.5 m/s, the processor 40 may periodically update the partial map with a period of 100 ms. Compared with that in the partial map generated in the previous period, the real-time position of the robotic lawn mower 100 in the current partial map moves 5 cm.

In some examples, the processor 40 may plan a traveling path of the robotic lawn mower 100 by using the partial map generated in real time and corresponding to the real-time position of the robotic lawn mower 100 and/or the stored complete-area map and control the traveling electric motor 22 based on the planned traveling path. In some examples, the processor 40 may also control the driving electric motor 12 based on the partial map and/or the complete-area map.

In some examples, the sensor assembly 30 includes at least one of the vision sensor, the collision sensor, the inertial sensor, the laser radar (LiDAR), or the odometer.

Additionally, in some examples, when generating the partial map corresponding to the real-time position of the robotic lawn mower 100, the processor 40 may read the complete-area map stored in the memory 50, map map information in the complete-area map to a to-be-generated partial map to obtain an initial partial map, and update the initial partial map based on the environmental information collected by sensors to obtain the partial map used for the subsequent navigation. Specifically, the processor 40 may determine a map region corresponding to the to-be-generated partial map based on the real-time position of the robotic lawn mower 100, read the complete-area map, and map the map information in the map region in the complete-area map to the to-be-generated partial map to generate the initial partial map, that is, the initial partial map is a cut of the map region from the complete-area map. The processor 40 acquires the environmental information near the real-time position of the robotic lawn mower 100 and collected by the sensor assembly 30, analyzes and determines, based on the environmental information, map information not included in the complete-area map, such as the dynamic or static obstacle, the bump, and the pothole, and updates the initial partial map with the map information not included in the complete-area map. Subsequently, the processor 40 uses the updated partial map to navigate the robotic lawn mower 100.

In the robotic lawn mower described in the preceding examples, the processor may generate the partial map corresponding to the real-time position of the robotic lawn mower. The partial map has the higher resolution than the complete-area map, may contain more map attributes that can reflect real-time traveling situations, and can provide more accurate guidance for navigation and other action control of the robotic lawn mower.

In an example, the robotic lawn mower 100 includes at least the drive assembly 10, the traveling assembly 20, the sensor assembly 30, the memory 50, and the processor 40. The memory 50 stores a map of the working region of the robotic lawn mower 100, where the map may be an overall map or a partial map of the working region of the robotic lawn mower 100.

The processor 40 is electrically or communicatively connected to the sensor assembly 30 and can acquire various environmental information collected by the sensor assembly 30. After obtaining the various environmental information, the processor 40 may determine a road condition based on the various environmental information. Specifically, the processor 40 may acquire environmental information collected by the sensor assembly 30 and near different positions in the working region of the robotic lawn mower 100, such as environmental images, mileage data, and acceleration data, and analyze and process the environmental information to determine obstacle conditions, bump conditions, or collision conditions near the different positions in the working region, thereby determining road conditions near the different positions in the working region. The processor 40 may preset multiple types of road conditions and determine road conditions near various positions, that is, determine types of the road conditions near such positions. In some examples, the processor 40 may determine a road condition near the real-time position of the robotic lawn mower 100 based on the environmental information collected by the sensor assembly 30 and near the real-time position of the robotic lawn mower 100. In some other examples, the processor 40 may determine road conditions near multiple different positions based on environmental information collected by the sensor assembly 30 and near the multiple different positions of the robotic lawn mower 100.

In some examples, the multiple preset types of road conditions include, but are not limited to, at least two of a bumpy region, a pit region, a ramp region, a non-grass region, an obstacle-prone region, a slippery region, and an easily trapped region.

In some examples, the processor 40 may determine whether the bumpy region exists near the current position based on three-axis acceleration data collected by the inertial sensor. In some other examples, the processor 40 may determine whether the pit region or the ramp region exists near the current position based on an image captured by the vision sensor and a three-axis acceleration collected by the inertial sensor. In some other examples, the processor 40 may determine whether the obstacle-prone region exists near the current position based on an environmental image collected by the vision sensor and an overload current of an encoder disk. In some other examples, the processor 40 may detect the slippery region or the easily trapped region based on positioning of the odometer.

In some examples, the processor 40 may control the traveling electric motor 22 based on the road condition to control the traveling path, the traveling speed, and the like. In some examples, the processor 40 may also control the driving electric motor 12 based on the road condition to adjust the cutting state of the blade and the like.

The processor 40 is further electrically or communicatively connected to the memory 50 and can interact with the memory 50 about map information.

As shown in FIGS. 5 to 7, a map is composed of multiple map grids. With the complete-area map as an example, the map grids may correspond to different portions of the working region, and each map grid separately records map information such as a road condition in a partial working region corresponding to the map grid.

After determining a road condition near a position in the working region, the processor 40 may interact with the memory 50 to record the determined road condition on a map grid corresponding to the position in the map. When the robotic lawn mower 100 reaches a region corresponding to the map grid again at a later moment, a road condition update module in the processor 40 may re-determine a road condition based on environmental information newly collected by the sensor assembly 30 and interact with the memory 50 to update map information on the map grid with the re-determined road condition in the map.

In some examples, the robotic lawn mower 100 further includes a human-machine interaction assembly that allows a user to update road conditions on one or more map grids through human-machine interaction. Specifically, map information such as road conditions on one or more map grids of the map in the memory 50 may be modified through a data interface of the robotic lawn mower 100.

**In** some examples, in addition to determining and recording the road conditions on the map grids, the processor 40 determines and records probabilities of different road conditions on the map grids. Specifically, after analyzing a road condition on a map grid based on various environmental information collected by sensors, the processor 40 may determine a road condition probability of the road condition on the map grid based on the cumulative number the road condition occurs on the map grid or a frequency of the road condition on the map grid within a preset period and record the road condition probability together in the map. For example, a frequently occurring road condition has a high road condition probability, while an occasionally occurring road condition has a low road condition probability. Similarly, when the robotic lawn mower 100 reaches a region corresponding to the map grid again at a later moment, the road condition update module in the processor 40 may re-determine the road condition probability based on environmental information newly collected by the sensor assembly 30 and interact with the memory 50 to update map information on the map grid with the re-determined road condition probability in the map. **In** some other examples, the processor 40 may determine road condition probabilities of different road conditions on map grids in conjunction with temporal attributes and spatial attributes of the environmental information collected by the sensor assembly 30, for example, may determine that a road condition on a map grid has a high road condition probability within a period and a low road condition probability within other periods. As another example, when the same road condition on a map grid is determined multiple times at different moments, in different traveling directions, or on different traveling paths of the robotic lawn mower 100, a road condition probability of the road condition on the map grid may be increased.

In some examples, before recording or updating the road conditions and the road condition probabilities on the map grids, the processor 40 may filter the environmental information collected by the sensor assembly 30 and use the filtered environmental information to record or update the road conditions and the road condition probabilities on the map grids. Specifically, the processor 40 may filter the environmental information based on the temporal attributes and the spatial attributes of the environmental information collected by the sensor assembly 30. For example, environmental information collected at close positions or at close times has a high data similarity, and abnormal data may be filtered.

In some examples, after the road conditions and the road condition probabilities on the map grids in the map are recorded and updated, the processor 40 may calculate cost values of the map grids based on the road conditions and the road condition probabilities and plan the traveling path of the robotic lawn mower 100 based on the cost values of the map grids in the map. Specifically, the processor 40 may calculate the cost values of the map grids based on preset cost weights corresponding to the types of road conditions and the road conditions and the road condition probabilities on the map grids and plan the traveling path of the robotic lawn mower 100 with the aim of the lower cost value based on the cost values of the map grids. For example, the more dangerous the road condition and the higher the road condition probability, the higher a cost value of a map grid. When the traveling path is planned, map grids with high cost values may be avoided as much as possible.

In some examples, in addition to determining and recording the road conditions and the road condition probabilities on the map grids, the processor 40 may determine at least one of second map attributes such as mowing, lifting, a collision, a boundary, an obstacle, and a charging pile near a different position in the working region based on various environmental information collected by sensors and record the determined second map attribute on a map grid corresponding to the position in the map.

In some examples, in addition to planning the traveling path of the robotic lawn mower 100 based on the cost values of the map grids, the processor 40 may adjust the planned traveling path based on at least one of the second map attributes such as the mowing, the lifting, the collision, the boundary, the obstacle, and the charging pile. For example, after planning the traveling path based on the cost values of the grids, the processor 40 may optimize and adjust the planned traveling path based on the second map attribute, the boundary, so as to further ensure that the planned traveling path is not outside the working region. In some other examples, the second map attributes may be combined when the cost values of the map grids are calculated.

In the robotic lawn mower described in the preceding examples, the processor may generate a continuously and dynamically updated map marked with map information such as the road conditions, the road condition probabilities, and the cost values of the map grids, which can provide more accurate guidance for the navigation and other action control of the robotic lawn mower.

In an example, the robotic lawn mower 100 includes at least the drive assembly 10, the traveling assembly 20, the camera assembly 30, and the processor 40. The camera assembly 30 may collect a two-dimensional image around the robotic lawn mower 100, where the two-dimensional image is an environmental image around the robotic lawn mower 100 and specifically an RGB image or a grayscale image, which is not limited.

The processor 40 is electrically or communicatively connected to the camera assembly 30 and can acquire the two-dimensional image collected by the camera assembly 30. After obtaining the two-dimensional image, the processor 40 may identify a poor road condition in the two-dimensional image through semantic segmentation, verify the identified poor road condition based on a three-dimensional point cloud to obtain a verification result, and plan a traveling route of the robotic lawn mower 100 based on the verification result of the poor road condition. Specifically, the processor 40 may obtain image segments corresponding to the two-dimensional image and types of objects in the image segments through a semantic segmentation algorithm. The processor 40 may preset multiple types of poor road conditions. When an object in the two-dimensional image is one of the multiple preset types of poor road conditions, the processor 40 identifies a position and a type of one poor road condition in the two-dimensional image, thereby obtaining positions and types of poor road conditions in the two-dimensional image. Then, the processor 40 may verify the poor road conditions by using the three-dimensional point cloud and plan the traveling path of the robotic lawn mower 100 based on verification results of the poor road conditions.

In some examples, the multiple preset types of poor road conditions include, but are not limited to, at least two of a pothole, a water area, and a haystack.

In some examples, the processor 40 may determine depth information of each poor road condition and depth information of a traveling plane of the robotic lawn mower 100 based on the three-dimensional point cloud and verify the poor road condition based on the depth information of the poor road condition and the depth information of the traveling plane. Specifically, the processor 40 may perform registration between the two-dimensional image and the three-dimensional point cloud to obtain a registration relationship between the two-dimensional image and the three-dimensional point cloud, where the registration between the two-dimensional image and the three-dimensional point cloud refers to the calibration between a coordinate system of the two-dimensional image and a coordinate system of the three-dimensional point cloud. Based on the registration relationship between the two-dimensional image and the three-dimensional point cloud, coordinate information of the identified poor road condition in the two-dimensional image may be converted into the depth information of the poor road condition. Based on the registration relationship between the two-dimensional image and the three-dimensional point cloud, coordinate information of the traveling plane near the poor road condition in the two-dimensional image may also be converted into the depth information of the traveling plane.

In some examples, coordinate information of each poor road condition may be coordinate information of a region within a bounding box of the poor road condition identified by the processor 40 through the semantic segmentation algorithm. In some examples, the processor 40 may segment the two-dimensional image into multiple image regions and identify the types of the objects in the image regions through the semantic segmentation algorithm. Coordinate information of an image region where an object identified as a preset type of poor road condition is located is the coordinate information of the poor road condition. In some other examples, the processor 40 may mark the identified poor road condition in the two-dimensional image in the form of the bounding box through the semantic segmentation algorithm, where coordinate information of an image region within the bounding box is the coordinate information of the poor road condition.

In some examples, the depth information of the traveling plane may be coordinate information of a region outside the bounding box of the poor road condition identified by the processor 40 through the semantic segmentation algorithm. Specifically, after determining the image region where the poor road condition is located, the processor 40 may use a complement of the image region in the two-dimensional image as an image region where the traveling plane is located, and coordinate information of the image region corresponding to the complement is the coordinate information of the traveling plane.

In some examples, the processor 40 may detect whether the depth information of the traveling plane of the robotic lawn mower 100 conforms to preset plane depth information and if not, determine that the poor road condition fails to be verified. Specifically, the processor 40 may fit a plane based on the depth information and verify the centroid and/or a normal vector of the fitted plane. In the case where the centroid or the normal vector of the fitted plane does not conform to the centroid or a normal vector of a preset standard ground, for example, in the case where a distance error between the centroid and the standard centroid exceeds a threshold or an angle error between the normal vector and the standard normal vector exceeds a threshold, the processor 40 determines that the poor road condition fails to be verified.

In some examples, the processor 40 may verify the poor road condition based on a depth relationship between the depth information of the poor road condition and the depth information of the traveling plane. When the depth relationship between the depth information of the poor road condition and the depth information of the traveling plane conforms to a depth relationship corresponding to the type of the poor road condition, it is determined that the poor road condition is verified successfully. For example, a depth relationship between a poor road condition whose type is the pothole and the traveling plane should be that the poor road condition is below the traveling plane. If the relationship between their depth information conforms to the above relationship, it may be determined that the pothole is verified successfully.

The three-dimensional point cloud for the processor 40 to verify the poor road condition may be generated by the processor 40 or collected by the sensor assembly 30. In some examples, the camera assembly 30 includes at least a first camera and a second camera, and the processor 40 may generate the three-dimensional point cloud based on at least two two-dimensional images collected by the camera assembly 30. For example, the processor 40 may generate, through a binocular camera model, the corresponding three-dimensional point cloud based on two two-dimensional images separately collected by the first camera and the second camera at the same moment. In some other examples, the robotic lawn mower 100 further includes a sensor such as the laser radar (LiDAR) that can collect environmental information around the robotic lawn mower 100, generate a corresponding three-dimensional point cloud, and transmit the three-dimensional point cloud to the processor 40.

In the robotic lawn mower described in the preceding examples, the processor may verify the identified poor road conditions in the two-dimensional image by using the three-dimensional point cloud and plan the traveling path of the robotic lawn mower in conjunction with the verification results of the poor road conditions, thereby reducing an effect of mis-determination of a poor road condition on path planning and improving the accuracy of navigation and other action control of the robotic lawn mower.

In an example, the robotic lawn mower 100 includes at least the drive assembly 10, the traveling assembly 20, the camera assembly 30, and the processor 40. The camera assembly 30 includes at least a first camera and a second camera, where the first camera collects a first environmental image around the robotic lawn mower 100, and the second camera collects a second environmental image around the robotic lawn mower 100. The first environmental image and the second environmental image are two-dimensional images and specifically RGB images or grayscale images, which are not limited.

In some examples, the first camera is disposed on the left side of the second camera. It is to be understood that a relative position relationship between the first camera and the second camera is described here, and the first camera may be disposed on the right, upper, or lower side of the second camera. In some other examples, the first camera and the second camera together form a binocular camera which may be a passive binocular camera or an active binocular camera. In some other examples, the first camera and/or the second camera are fisheye cameras. In some other examples, the camera assembly 30 further includes another type of depth camera, such as a structured light camera or a time-of-flight (ToF) camera.

The processor 40 is electrically or communicatively connected to the camera assembly 30 and can acquire the first environmental image and the second environmental image collected by the camera assembly 30. After obtaining the first environmental image and the second environmental image, the processor 40 may identify positions and types of objects in the first environmental image and the second environmental image through semantic segmentation. Specifically, the processor 40 receives one first environmental image and one second environmental image at the same moment and performs segmentation and identification on the two environmental images through the semantic segmentation to obtain first image segments corresponding to the first environmental image and types of objects in the first image segments and second image segments corresponding to the second environmental image and types of objects in the second image segments. In some examples, image segments obtained through the semantic segmentation may be multiple image regions into which the original environmental image is segmented, and types of objects in the image regions may be identified. It is to be understood that in other examples, the processor 40 may combine instance segmentation and panoptic segmentation with the semantic segmentation.

After identifying the objects in the first environmental image and the second environmental image, the processor 40 may associate duplicate objects appearing in both the first environmental image and the second environmental image. Specifically, the processor 40 may perform matching based on the positions and the types of the objects in the first environmental image and the second environmental image and associate objects at the same or similar positions and of the same type.

The processor 40 may perform stereo matching on the associated duplicate objects by using coordinate information of the associated duplicate objects in the first environmental image and coordinate information of the associated duplicate objects in the second environmental image to obtain depth information of the duplicate objects and control the traveling electric motor 22 based on identification results and the depth information of the duplicate objects. In some cases, the processor 40 also controls the driving electric motor 12 based on the identification results and the depth information of the duplicate objects. Specifically, due to the parallax of a duplicate object between the first camera and the second camera, the processor 40 may obtain a disparity map corresponding to the duplicate object based on a difference between coordinate information of the duplicate object in the first environmental image and coordinate information of the duplicate object in the second environmental image and calculate depth information of the duplicate object based on the disparity map of the duplicate object. In some examples, the processor 40 may calculate the depth information using the corresponding binocular camera model.

In some examples, after associating the duplicate objects, the processor 40 may perform stereo matching only on duplicate objects of preset types to further reduce a computational load of the processor 40 and a data transmission volume between devices.

In the robotic lawn mower described in the preceding examples, the processor does not directly perform stereo matching on the first environmental image and the second environmental image but performs object recognition and duplicate object association on the first environmental image and the second environmental image, performs stereo matching only on the duplicate objects in the first environmental image and the second environmental image, and subsequently controls the robotic lawn mower by using the depth information obtained from the stereo matching on the duplicate objects, which can achieve the beneficial effects of reducing the computational data volume of the processor and the data transmission volume between devices.

In an example, the robotic lawn mower 100 includes at least the drive assembly 10, the traveling assembly 20, the camera assembly 30, and the processor 40. The camera assembly 30 collects an environmental image around the robotic lawn mower 100. The environmental image may be a two-dimensional image or a three-dimensional image and specifically an RGB image or a grayscale image, which is not limited.

The processor 40 is electrically or communicatively connected to the camera assembly 30 and can acquire the environmental image collected by the camera assembly 30. After obtaining the environmental image, the processor 40 may cluster pixel points or voxel points in the environmental image to obtain a pixel set or a voxel set corresponding to each object in the environmental image. Specifically, the two-dimensional environmental image is composed of multiple pixel points, and the three-dimensional environmental image is composed of multiple voxel points. Based on a clustering algorithm, the pixel points are clustered based on RGB values or grayscale values, or the voxel points are clustered based on coordinates of the voxel points. Multiple pixel sets may be obtained from the two-dimensional environmental image, or multiple voxel sets may be obtained from the three-dimensional environmental image. Pixel points or voxel points in the same set are regarded as belonging to the same class. For example, the pixel points or voxel points in the same set are pixel points or voxel points forming the same object.

The processor 40 determines whether to delete the pixel set or the voxel set based on a dimension of the pixel set or the voxel set, deletes the pixel set or the voxel set when the dimension of the pixel set or the voxel set is less than or equal to a first threshold, and identifies a type of the object corresponding to the pixel set or the voxel set when the dimension of the pixel set or the voxel set is greater than or equal to a second threshold, where the first threshold is less than or equal to the second threshold. After deletion and identification, the processor 40 subsequently controls the traveling electric motor 22 based on types of objects corresponding to pixel sets or voxel sets that are not deleted. In some examples, the processor 40 may also control the driving electric motor 12 based on the types of the objects corresponding to the pixel sets or the voxel sets that are not deleted.

In some examples, the processor 40 clusters the pixel points in the two-dimensional environmental image or the voxel points in the three-dimensional environmental image using a k-means algorithm or a region growing algorithm. It is to be understood that other clustering algorithms not illustrated may be used to cluster the pixel points or the voxel points to adapt to practical scenario requirements.

The pixel set in the two-dimensional environmental image may be an image region in the two-dimensional environmental image, and the voxel set in the three-dimensional environmental image may be an image space in the three-dimensional environmental image. In some examples, the dimension of the pixel set may be the length or width of the corresponding image region, and the dimension of the voxel set may be the length, width, or height of the corresponding image space. In some other examples, the dimension of the pixel set may be the length of a planar diagonal of the corresponding image region, and the dimension of the voxel set may be the length of a three-dimensional diagonal of the corresponding image space. In some other examples, the dimension of the pixel set may be a maximum value of the distance between two pixel points in the corresponding image region, and the dimension of the voxel set may be a maximum value of the distance between two voxel points in the corresponding image space.

In some examples, the first threshold compared with the dimension of the pixel set or the voxel set may be 5 cm. In some other examples, the first threshold compared with the dimension of the pixel set or the voxel set may be 3 cm.

The pixel sets in the two-dimensional environmental image can reflect limited information. In some examples, the processor 40 may further convert the pixel sets into the corresponding voxel sets based on a camera parameter of the camera assembly 30. Specifically, the camera parameter of the camera assembly 30 may include intrinsic and extrinsic parameters of a camera, which enable the mapping and transformation between a two-dimensional pixel coordinate system and a three-dimensional voxel coordinate system. In some examples, the first threshold compared with the voxel sets obtained through conversion may be 3 cm.

In some examples, the camera assembly 30 includes at least a first camera and a second camera, and the processor 40 may perform stereo matching on two-dimensional environmental images separately collected by the two cameras at the same moment to obtain a corresponding three-dimensional environmental image and subsequently perform voxel point clustering, voxel set deletion, and identification on the three-dimensional environmental image.

Furthermore, in addition to the dimension as a criterion for deleting the pixel set or the voxel set, another set parameter may be used as the criterion for deleting the pixel set or the voxel set. In some examples, after obtaining the pixel set or the voxel set through clustering, the processor 40 may determine whether to delete the pixel set or the voxel set based on the number of pixel points in the pixel set or the number of voxel points in the voxel set, delete the pixel set or the voxel set in the case where the number of pixel points in the pixel set is less than or equal to a third threshold or the number of voxel points in the voxel set is less than or equal to a fifth threshold, and identify the type of the object corresponding to the pixel set or the voxel set in the case where the number of pixel points in the pixel set is greater than or equal to a fourth threshold or the number of voxel points in the voxel set is greater than or equal to a sixth threshold, where the third threshold is less than or equal to the fourth threshold, and the fifth threshold is less than or equal to the sixth threshold. After deletion and identification, the processor 40 subsequently controls the traveling electric motor 22 based on the types of the objects corresponding to the pixel sets or the voxel sets that are not deleted. In some examples, the processor 40 may also control the driving electric motor 12 based on the types of the objects corresponding to the pixel sets or the voxel sets that are not deleted.

In some examples, the fifth threshold compared with the number of voxel points in the voxel set may be 15.

In the robotic lawn mower 100 described in the preceding examples, the processor 40 does not directly perform object recognition on the environmental image but clusters the pixel points or the voxel points in the environmental image, deletes pixel sets or voxel sets whose dimensions are less than the threshold, and identifies the types of the objects corresponding to only the pixel sets or the voxel sets whose dimensions are greater than the threshold, which can achieve the beneficial effects of reducing the computational data volume of the processor 40 and the data transmission volume between devices.

In an example, the robotic lawn mower 100 includes at least the drive assembly 10, the traveling assembly 20, the sensor assembly 30, a first processor 41, and a second processor 42. The first processor 41 and the second processor 42 are configured to undertake different processing tasks. Referring to FIG. 9, the first processor 41 is electrically or communicatively connected to the sensor assembly 30, can receive environmental information around the robotic lawn mower 100 and collected by the sensor assembly 30, and can perform data interaction with the second processor 42. The second processor 42 can perform data interaction with the first processor 41 and control the action of the robotic lawn mower 100. In some examples, the first processor 41 and the second processor 42 may be physically different processors, for example, may be MCU1 and MCU2, respectively. Alternatively, the first processor 41 and the second processor 42 may be virtually different processors, for example, may be vCPU1 (virtual central processing unit 1) and vCPU2, respectively.

After obtaining the environmental information, the first processor 41 may identify an obstacle around the robotic lawn mower 100 and obtain a coordinate set of the obstacle based on the environmental information, determine representative coordinates of the obstacle based on the coordinate set, and transmit the representative coordinates to the second processor 42. Specifically, based on the environmental information such as an environmental image collected by the vision sensor or a laser point cloud collected by the laser radar, the first processor 41 may identify the obstacle around the robotic lawn mower 100 and obtain an image region of the obstacle in a two-dimensional image, an image space of the obstacle in a three-dimensional image, or a point cloud space of the obstacle in a three-dimensional point cloud. Based on such image regions, image spaces, or point cloud spaces, coordinate sets of obstacles may be determined, representative coordinates characterizing positions of the obstacles may be further selected from the coordinate sets, and the representative coordinates of the obstacles may be transmitted to the second processor 42.

After receiving the representative coordinates of the obstacles from the first processor 41, the second processor 42 may control the traveling electric motor 22 based on the representative coordinates of the obstacles. In some examples, the second processor 42 may also control the driving electric motor 12 based on the representative coordinates.

In some examples, the sensor assembly 30 includes the camera assembly that can collect an environmental image around the robotic lawn mower 100 and transmit the environmental image to the first processor 41.

In some examples, the sensor assembly 30 includes the binocular camera and/or the laser radar (LiDAR).

In some examples, when identifying the obstacle around the robotic lawn mower 100 based on the two-dimensional environmental image, the first processor 41 obtains a bounding box of each obstacle in the two-dimensional environmental image and may use coordinates of two vertices of a planar diagonal of the bounding box as the representative coordinates of the obstacle. In some examples, the first processor 41 may also convert the coordinates of the vertices of the planar diagonal into coordinates of vertices of a three-dimensional diagonal based on intrinsic and extrinsic parameters of a camera in the camera assembly 30 and transmit the coordinates of the vertices of the three-dimensional diagonal to the second processor 42.

In some other examples, when identifying the obstacle around the robotic lawn mower 100 based on the three-dimensional environmental image or the three-dimensional point cloud, the first processor 41 obtains a bounding box of each obstacle in the three-dimensional environmental image or the three-dimensional point cloud and may use coordinates of two vertices of a three-dimensional diagonal of the bounding box as the representative coordinates of the obstacle.

In some examples, when identifying the obstacle based on the environmental image, the first processor 41 obtains a type of each obstacle and may transmit the type of each obstacle and the representative coordinates of each obstacle to the second processor 42.

In some examples, the first processor 41 may be a graphics processing unit (GPU), and the second processor 42 may be a CPU. It is to be understood that, in some cases, the robotic lawn mower actually includes two systems on chips (SoCs), where the CPU and the GPU are disposed on one chip, the CPU is disposed on the other chip, the chip including the GPU performs image processing and other computation, and interaction of processed data is performed between the two chips.

In some examples, the first processor 41 may be a neural-network processing unit (NPU), and the second processor 42 may be a CPU.

In some examples, a data volume of the representative coordinates of the obstacles about which the first processor 41 interacts with the second processor 42 is less than or equal to 100 bytes.

In the robotic lawn mower described in the preceding examples, the first processor interacts with the second processor about position information of the obstacles by using the representative coordinates of the obstacles rather than the complete coordinate sets of the obstacles, which can effectively reduce the data interaction volume between the first processor and the second processor and alleviate the data transmission and processing burden of the processors.

It is to be noted that the preceding examples are not mutually exclusive or independent, and new examples obtained by combining all or part of the contents in multiple examples according to actual scenario requirements are also within the scope of the present application.

For example, the processor 40 may identify the types of the objects in the two-dimensional environmental image collected by the camera assembly 30 and after identifying an object belonging to a type of poor road condition, verify the poor road condition by using the three-dimensional point cloud and call the partial map for path planning and obstacle avoidance in response to successful verification, so as to improve the accuracy of object recognition, path planning, and obstacle avoidance of the robotic lawn mower.

As another example, based on various environmental information collected by the sensor assembly 30, the processor 40 may update the map information such as real-time obstacles, the traveling speed, and the mileage data in the partial map corresponding to the real-time position of the robotic lawn mower 100 and update the map information such as the road conditions, the road condition probabilities, and the cost values of the map grids in the complete-area map corresponding to the real-time position of the robotic lawn mower 100, so as to improve a map generation capability of the robotic lawn mower and the performance of the generated maps.

As another example, the first processor 41 may cluster pixel points in the environmental images collected by the first camera and the second camera in the camera assembly 30 to obtain pixel sets corresponding to objects in the environmental images, delete a pixel set based on the dimension of the pixel set, and perform identification. Then, the first processor 41 may associate duplicate objects in the first environmental image and the second environmental image after the pixel set whose dimension is less than a threshold is deleted and perform stereo matching on the associated duplicate objects to obtain depth information of the duplicate objects. Finally, the first processor 41 may determine representative coordinates of obstacles based on depth information of duplicate objects belonging to the obstacles and transmit the representative coordinates of the obstacles to the second processor 42. The second processor 42 controls the traveling electric motor 22 based on the representative coordinates of the obstacles, so as to reduce the computational data volume of the processor and the data transmission volume between devices.

**It** is to be understood that the preceding examples may be applied to an outdoor work vehicle independently or in combination. The outdoor work vehicle in the present application may be a device capable of planning and deciding a course itself, such as the preceding robotic lawn mower, or may be, for example, a robotic snow thrower. Alternatively, the outdoor work vehicle may be another device with autonomous traveling as a reference or alternative function, for example, a manned mower such as a riding mower or a stand-on mower, a washer, a utility task vehicle/utility terrain vehicle (UTV), an all-terrain vehicle (ATV), a dune buggy, or a golf cart.

The basic principles, main features, and advantages of this application are shown and described above. **It** is to be understood by those skilled in the art that the aforementioned examples do not limit the present application in any form, and all technical solutions obtained through equivalent substitutions or equivalent transformations fall within the scope of the present application.

## Claims

1. A robotic lawn mower, comprising:
a drive assembly comprising a blade and a driving electric motor for driving the blade;
a traveling assembly comprising traveling wheels and a traveling electric motor for driving the traveling wheels;
a camera assembly configured to collect a two-dimensional image around the robotic lawn mower; and
a processor communicatively or electrically connected to the camera assembly and
configured to control an action of the robotic lawn mower based on at least the two-dimensional image;
wherein the processor is further configured to identify a poor road condition in the two-dimensional image through semantic segmentation, wherein the poor road condition is one of a plurality of preset types of poor road conditions; verify the poor road condition based on a three-dimensional point cloud to obtain a verification result; and plan a traveling route of the robotic lawn mower based on the verification result.

2. The robotic lawn mower according to claim 1, wherein the processor is further configured to perform avoidance or deceleration in response to the verified poor road condition.

3. The robotic lawn mower according to claim 1, wherein the plurality of preset types of poor road conditions comprise at least two of a pothole, a water area, and a haystack.

4. The robotic lawn mower according to claim 1, wherein the camera assembly comprises at least a first camera and a second camera, and the processor is further configured to generate the three-dimensional point cloud based on at least two two-dimensional images.

5. The robotic lawn mower according to claim 1, further comprising a sensor assembly communicatively or electrically connected to the processor and configured to collect environmental information around the robotic lawn mower to generate the three-dimensional point cloud and transmit the three-dimensional point cloud to the processor.

6. The robotic lawn mower according to claim 1, wherein the processor is configured to determine depth information of the poor road condition and depth information of a traveling plane of the robotic lawn mower based on the three-dimensional point cloud and verify the poor road condition based on the depth information of the poor road condition and the depth information of the traveling plane.

7. The robotic lawn mower according to claim 6, wherein the processor is configured to determine the depth information of the poor road condition based on coordinate information of the poor road condition in the two-dimensional image and a registration relationship between the two-dimensional image and the three-dimensional point cloud.

8. The robotic lawn mower according to claim 7, wherein the processor is configured to obtain a bounding box of the poor road condition through the semantic segmentation, and the coordinate information of the poor road condition is coordinate information of a region within the bounding box in the two-dimensional image.

9. The robotic lawn mower according to claim 6, wherein the processor is configured to determine the depth information of the traveling plane based on coordinate information of the traveling plane within a certain distance around a position of the poor road condition in the two-dimensional image and a registration relationship between the two-dimensional image and the three-dimensional point cloud.

10. The robotic lawn mower according to claim 9, wherein the processor is configured to obtain a bounding box of the poor road condition through the semantic segmentation, and the coordinate information of the traveling plane is coordinate information of a region outside the bounding box in the two-dimensional image.

11. The robotic lawn mower according to claim 6, wherein the processor is configured to, when the depth information of the traveling plane does not conform to preset plane depth information, determine that the poor road condition fails to be verified.

12. The robotic lawn mower according to claim 6, wherein the processor is configured to, when a depth relationship between the depth information of the poor road condition and the depth information of the traveling plane conforms to a preset depth relationship corresponding to a type of the poor road condition, determine that the poor road condition is verified successfully.

13. A robotic lawn mower, comprising:
a drive assembly comprising a blade and a driving electric motor for driving the blade;
a traveling assembly comprising traveling wheels and a traveling electric motor for driving the traveling wheels;
a sensor assembly configured to collect environmental information around the robotic lawn mower;
a memory configured to store a complete-area map of a working region of the robotic lawn mower; and
a processor communicatively or electrically connected to the sensor assembly and the memory and configured to control an action of the robotic lawn mower based on at least the environmental information collected by the sensor;
wherein the processor is further configured to construct a partial map around a real-time position of the robotic lawn mower based on the environmental information collected by the sensor assembly, and the partial map has a higher resolution than the complete-area map.

14. The robotic lawn mower according to claim 13, wherein the partial map contains more types of map attributes than the complete-area map.

15. The robotic lawn mower according to claim 13, wherein a resolution of the partial map is greater than or equal to 1 cm and less than or equal to 20 cm.

16. The robotic lawn mower according to claim 13, wherein the processor is configured to map, based on the real-time position of the robotic lawn mower, map information in the complete-area map to the partial map.

17. The robotic lawn mower according to claim 13, wherein a shape of the partial map is fixed, and a distance between a boundary of the partial map and the real-time position of the robotic lawn mower is less than or equal to 5 m.

18. The robotic lawn mower according to claim 13, wherein the processor is further configured to plan a traveling route of the robotic lawn mower based on the complete-area map and the partial map and control the traveling electric motor based on the traveling route.

19. The robotic lawn mower according to claim 13, wherein the partial map is composed of a plurality of map grids having different resolutions.

20. The robotic lawn mower according to claim 19, wherein a map grid closer to the real-time position of the robotic lawn mower among the plurality of map grids has a higher resolution.

21. The robotic lawn mower according to claim 13, wherein the sensor assembly comprises at least one of a vision sensor, a collision sensor, an inertial sensor, a laser radar, or an odometer.

22. The robotic lawn mower according to claim 13, wherein the processor is configured to update the partial map in real time.

23. A robotic lawn mower, comprising:
a drive assembly comprising a blade and a driving electric motor for driving the blade;
a traveling assembly comprising traveling wheels and a traveling electric motor for driving the traveling wheels;
a sensor assembly configured to collect environmental information around the robotic lawn mower;
a memory configured to store a complete-area map of a working region of the robotic lawn mower; and
a processor communicatively or electrically connected to the sensor assembly and the memory and configured to control an action of the robotic lawn mower based on at least the environmental information collected by the sensor;
wherein the processor is further configured to map, based on a real-time position of the robotic lawn mower, map information in the complete-area map to an initial partial map around the real-time position, update the initial partial map by using the environmental information collected by the sensor assembly to generate a partial map around the real-time position, and control the traveling electric motor based on the complete-area map and the partial map.

24. A robotic lawn mower, comprising:
a drive assembly comprising a blade and a driving electric motor for driving the blade;
a traveling assembly comprising traveling wheels and a traveling electric motor for driving the traveling wheels;
a sensor assembly comprising at least one of a vision sensor, a collision sensor, an inertial sensor, an odometer, or a laser radar;
a memory configured to store a map of a working region of the robotic lawn mower, wherein the map is divided into a plurality of map grids; and
a processor communicatively or electrically connected to the sensor assembly and the memory and configured to control an action of the robotic lawn mower based on at least environmental information collected by the sensor assembly;
wherein the processor is further configured to determine a road condition based on the environmental information collected by the sensor assembly, the road condition being at least one of a plurality of preset types of road conditions; and record the road condition on a map grid corresponding to the road condition in the map; and the processor further comprises a road condition update module configured to update the road condition on the corresponding map grid in the map based on environmental information newly collected by the sensor assembly.

25. The robotic lawn mower according to claim 24, further comprising a human-machine interaction assembly configured for a user to update road conditions on one or more map grids in the map through human-machine interaction.

26. The robotic lawn mower according to claim 24, wherein the plurality of preset types of road conditions comprise at least two of a bumpy region, a pit region, a ramp region, a non-grass region, an obstacle-prone region, a slippery region, and an easily trapped region.

27. The robotic lawn mower according to claim 24, wherein the processor is further configured to record a road condition probability corresponding to the road condition on the map grid corresponding to the road condition in the map; and the road condition update module is further configured to update the road condition probability on the corresponding map grid in the map based on the environmental information newly collected by the sensor assembly.

28. The robotic lawn mower according to claim 27, wherein the processor is further configured to filter the environmental information collected by the sensor assembly based on temporal attributes and spatial attributes of the environmental information collected by the sensor assembly; and the road condition update module is configured to update the road condition and the road condition probability based on the filtered environmental information collected by the sensor assembly.

29. The robotic lawn mower according to claim 27, wherein the processor is further configured to determine a cost value of each map grid based on the road condition and the road condition probability on the map grid and plan a traveling path of the robotic lawn mower based on the cost value of each map grid.

30. The robotic lawn mower according to claim 29, wherein the memory is further configured to store at least one second map attribute of grids in the map; and the processor is further configured to adjust the traveling path based on the at least one second map attribute.

31. The robotic lawn mower according to claim 30, wherein each second map attribute among the at least one second map attribute comprises at least one of mowing, lifting, a collision, a boundary, an obstacle, or a charging pile.

32. The robotic lawn mower according to claim 29 or 30, wherein the processor is configured to control, based on the cost value and/or the at least one second map attribute, the traveling electric motor to drive the traveling wheels at different speeds.

33. A robotic lawn mower, comprising:
a drive assembly comprising a blade and a driving electric motor for driving the blade;
a traveling assembly comprising traveling wheels and a traveling electric motor for driving the traveling wheels;
a camera assembly comprising a first camera and a second camera, wherein the first camera is configured to collect a first environmental image around the robotic lawn mower, the second camera is configured to collect a second environmental image around the robotic lawn mower, and the first environmental image and the second environmental image are two-dimensional images; and
a processor communicatively or electrically connected to the camera assembly and configured to control an action of the robotic lawn mower based on at least the first environmental image and the second environmental image;
wherein the processor is further configured to separately identify objects comprised in the first environmental image and the second environmental image through semantic segmentation; associate duplicate objects in the first environmental image and the second environmental image; perform stereo matching on the duplicate objects in the first environmental image and the second environmental image to acquire depth information of the duplicate objects; and control the traveling electric motor based on identification results and the depth information of the duplicate objects.

34. The robotic lawn mower according to claim 33, wherein the first camera is disposed on a left side of the second camera.

35. The robotic lawn mower according to claim 33, wherein the first camera and the second camera form a binocular camera.

36. The robotic lawn mower according to claim 33, wherein the first camera or the second camera is a fisheye camera.

37. The robotic lawn mower according to claim 33, wherein the camera assembly further comprises a structured light camera and/or a time-of-flight (ToF) camera.

38. A robotic lawn mower, comprising:
a drive assembly comprising a blade and a driving electric motor for driving the blade;
a traveling assembly comprising traveling wheels and a traveling electric motor for driving the traveling wheels;
a sensor assembly configured to collect environmental information around the robotic lawn mower; and
a processor communicatively or electrically connected to the sensor assembly and configured to control an action of the robotic lawn mower based on at least the environmental information collected by the sensor assembly;
wherein the processor is further configured to identify an obstacle and determine whether the obstacle is static or dynamic based on the environmental information collected by the sensor assembly; use a first map for navigation when the obstacle is determined to be dynamic; and use a second map for navigation when the obstacle is determined to be static.

39. The robotic lawn mower according to claim 38, wherein the second map is a partial map which is a map within a certain distance around a real-time position of the robotic lawn mower.

40. The robotic lawn mower according to claim 38, wherein the second map is updated in real time during movement of the robotic lawn mower.

41. The robotic lawn mower according to claim 38, wherein the first map is a complete-area map which is an overall map of a working region of the robotic lawn mower.

42. The robotic lawn mower according to claim 38, wherein the second map has a higher resolution than the first map.

43. The robotic lawn mower according to claim 38, wherein the processor is further configured to control the traveling electric motor to drive the traveling wheels at a first speed when using the first map for navigation and control the traveling electric motor to drive the traveling wheels at a second speed when using the second map for navigation.

44. The robotic lawn mower according to claim 38, wherein the sensor assembly comprises a camera assembly configured to collect an environmental image around the robotic lawn mower.

45. The robotic lawn mower according to claim 44, wherein the processor is configured to identify an obstacle in the environmental image and a type of the obstacle by using a semantic segmentation algorithm and determine the obstacle to be dynamic when the obstacle is identified as a human or an animal.

46. The robotic lawn mower according to claim 44, wherein the processor is configured to detect whether an object in the environmental image is dynamic by an optical flow method or a target tracking method.

47. The robotic lawn mower according to claim 38, wherein the sensor assembly comprises one or more of a binocular camera, a laser radar (LiDAR), or an infrared sensor.

48. A robotic lawn mower, comprising:
a drive assembly comprising a blade and a driving electric motor for driving the blade;
a traveling assembly comprising traveling wheels and a traveling electric motor for driving the traveling wheels;
a camera assembly configured to collect an environmental image around the robotic lawn mower, wherein the environmental image is a two-dimensional image or a three-dimensional image; and
a processor communicatively or electrically connected to the camera assembly and configured to control an action of the robotic lawn mower based on at least the environmental image;
wherein the processor is further configured to cluster pixel points or voxel points in the environmental image to obtain a pixel set or a voxel set corresponding to each object comprised in the environmental image; when a dimension of the pixel set or the voxel set is less than or equal to a first threshold, delete the pixel set or the voxel set; and when the dimension of the pixel set or the voxel set is greater than or equal to a second threshold, identify a type of the object corresponding to the pixel set or the voxel set, and control the traveling electric motor based on the type of the object.

49. The robotic lawn mower according to claim 48, wherein the processor is configured to cluster the pixel points or the voxel points in the environmental image using a *k-*means algorithm or a region growing algorithm.

50. The robotic lawn mower according to claim 48, wherein the camera assembly comprises at least two cameras, and the processor is configured to perform stereo matching on two two-dimensional environmental images collected by the two cameras at a same moment to generate a corresponding three-dimensional environmental image.

51. The robotic lawn mower according to claim 48, wherein the processor is configured to convert the pixel set into the corresponding voxel set based on a camera parameter of the camera assembly.

52. The robotic lawn mower according to claim 48, wherein the dimension is a length of a planar diagonal of a bounding box of the pixel set or a length of a three-dimensional diagonal of a bounding box of the voxel set.

53. The robotic lawn mower according to claim 48, wherein the dimension is one of a length, a width, or a height of a bounding box of the pixel set or the voxel set.

54. The robotic lawn mower according to claim 48, wherein the dimension is a maximum value of a distance between two pixel points or two voxel points in the pixel set or the voxel set.

55. The robotic lawn mower according to claim 48, wherein the first threshold is less than or equal to 5 cm.

56. A robotic lawn mower, comprising:
a drive assembly comprising a blade and a driving electric motor for driving the blade;
a traveling assembly comprising traveling wheels and a traveling electric motor for driving the traveling wheels;
a camera assembly configured to collect an environmental image around the robotic lawn mower, wherein the environmental image is a two-dimensional image or a three-dimensional image; and
a processor communicatively or electrically connected to the camera assembly and configured to control an action of the robotic lawn mower based on at least the environmental image;
wherein the processor is further configured to cluster pixel points or voxel points in the environmental image to obtain a pixel set or a voxel set corresponding to each object comprised in the environmental image; when a set parameter of the pixel set or the voxel set is less than or equal to a parameter threshold, delete the pixel set or the voxel set; and when the set parameter of the pixel set or the voxel set is greater than or equal to the parameter threshold, identify a type of the object corresponding to the pixel set or the voxel set, and control the traveling electric motor based on the type of the object.

57. The robotic lawn mower according to claim 56, wherein the set parameter is the number of pixel points or the number of voxel points.

58. The robotic lawn mower according to claim 57, wherein the parameter threshold corresponding to the number of voxel points is 15.

59. A robotic lawn mower, comprising:
a drive assembly comprising a blade and a driving electric motor for driving the blade;
a traveling assembly comprising traveling wheels and a traveling electric motor for driving the traveling wheels;
a sensor assembly configured to collect environmental information around the robotic lawn mower;
a first processor configured to identify an obstacle and determine a coordinate set of the obstacle based on the environmental information; and
a second processor configured to control an action of the robotic lawn mower;
wherein the first processor is further configured to determine representative coordinates of the obstacle based on the coordinate set of the obstacle and transmit the representative coordinates to the second processor; and the second processor is further configured to control the traveling electric motor based on the representative coordinates of the obstacle.

60. The robotic lawn mower according to claim 59, wherein the sensor assembly comprises a camera assembly configured to collect an environmental image around the robotic lawn mower.

61. The robotic lawn mower according to claim 60, wherein the first processor is a graphics processing unit (GPU), and the second processor is a central processing unit (CPU).

62. The robotic lawn mower according to claim 61, wherein the first processor is further configured to identify a type of the obstacle in the environmental image and transmit the type of the obstacle and the representative coordinates of the obstacle to the second processor.

63. The robotic lawn mower according to claim 59, wherein the representative coordinates are coordinates of vertices of a three-dimensional diagonal of a bounding box of the obstacle.

64. The robotic lawn mower according to claim 59, wherein the representative coordinates are coordinates of vertices of a planar diagonal of a bounding box of the obstacle.

65. The robotic lawn mower according to claim 59, wherein the sensor assembly comprises a binocular camera and/or a laser radar (LiDAR).

66. The robotic lawn mower according to claim 59, wherein a data volume of the representative coordinates is less than or equal to 100 bytes.
